# EUROPEAN PATENT SPECIFICATION

(11) **EP 4 529 151 B1**
(45) Date of publication and mention of the grant of the patent: **22.07.2026**
(21) Application number: 24200686.4
(22) Date of filing: 17.09.2024
(51) Int. Cl.: H04N 1/00, G06T 7/00, H04N 1/409

(54) **IMAGE FORMING APPARATUS, IMAGE FORMING SYSTEM, INSPECTION METHOD, AND CARRIER MEDIUM**
BILDERZEUGUNGSVORRICHTUNG, BILDERZEUGUNGSSYSTEM, INSPEKTIONSVERFAHREN UND TRÄGERMEDIUM
APPAREIL DE FORMATION D'IMAGE, SYSTÈME DE FORMATION D'IMAGE, PROCÉDÉ D'INSPECTION ET SUPPORT

(30) Priority: 22.09.2023 JP 2023158127
(43) Date of publication of application: 26.03.2025
(73) Proprietor: Ricoh Company, Ltd., Tokyo 143-8555 (JP)
(72) Inventor: AOYAGI, Kohta, Tokyo 143-8555 (JP); MATSUMOTO, Tohru, Tokyo 143-8555 (JP); KITAI, Tadashi, Tokyo 143-8555 (JP); ANAN, Daisuke, Tokyo 143-8555 (JP)
(74) Representative: SSM Sandmair

(56) References cited:
- US-A1- 2013 136 315
- US-A1- 2020 195 798
- US-A1- 2022 286 576
- US-A1- 2022 383 471

## Description

### BACKGROUND

### Technical Field

The present disclosure relates to an image forming apparatus, an image forming system, an inspection method, and a carrier medium.

### Related Art

A printing system is known, which includes a printing apparatus for forming an image on a sheet based on print data and an inspection apparatus that reads the image with a reading device and compares the read image with a master image generated from the print data of the image. The inspection apparatus can evaluate the print quality in accordance with the result of the comparison. In order to appropriately evaluate the print quality, it is preferable that defects such as dust are not present in the reading device.

In the art, a technique for detecting a defect caused by a reading part is known (for example, see Japanese Unexamined Patent Application Publication No. 2013-13204). According to the technique described in Japanese Unexamined Patent Application Publication No. 2013-13204, an image inspection system scans a blank area of a printed document to obtain only an image of a dirt on the exposure glass, determines whether the source of the dirt is the exposure glass or the white reference plate, and displays the position of the dirt and an instruction for cleaning on the operation panel.

However, the above-described technique has an issue that an operator needs to clean the reading part in order to eliminate a defect caused by the reading part. In other words, when the source of the dirt is determined to be the exposure glass or the white reference plate, the operator needs to clean the exposure glass or the white reference plate in any case.

US 2013/0136315 A1 discloses an image inspection method and apparatus for inspecting images output on sheets including a reference white plate disposed at a position of the transport route of sheet while facing a scan position for scanning a sheet; a contact glass disposed opposite the reference white plate; an image scanning device fixed facing the scan position to conduct a scanning operation through the contact glass, a noise detector to detect a first noise image in a blank area of the inspection sheet by scanning the blank area of the inspection sheet, and a second noise image in the reference white plate by scanning the reference white plate; and a stain source determination unit to determine a noise origin from the contact glass or the reference white plate.

US 2020/195798 A1 discloses an image reading device which includes: an image reading part that is disposed opposite paper conveyed along a conveyance path, and reads an image formed on the paper; and a hardware processor that performs an abnormality detection operation of detecting an abnormality in the image reading part, based on a first read image and a second read image that is different from the first read image in paper position at image reading time in a paper width direction orthogonal to a paper conveyance direction.

### SUMMARY

The invention is defined by the independent claims. The dependent claims refer to preferred embodiments of the invention.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of a printing system according to an embodiment of the present disclosure;
FIG. 2 is a block diagram illustrating a configuration of a digital front end (DFE) according to an embodiment of the present disclosure;
FIG. 3 is a block diagram illustrating a configuration of a printer according to an embodiment of the present disclosure;
FIG. 4 is a block diagram illustrating a configuration of an inspection apparatus according to an embodiment of the present disclosure;
FIG. 5 is a diagram illustrating an example of job management information according to an embodiment of the present disclosure;
FIG. 6 is a flowchart of the processing executed after completion of a detection process without sheet passage, according to an embodiment of the present disclosure;
FIG. 7 is a diagram illustrating an example of items used for determining a defect state, according to an embodiment of the present disclosure;
FIG. 8 is a flowchart of the processing for registering an inspection exclusion region according to an embodiment of the present disclosure;
FIG. 9 is a diagram illustrating a status display screen displayed by an inspection apparatus, according to an embodiment of the present disclosure;
FIG. 10 is a diagram illustrating another example of an error message displayed on a status display screen, according to an embodiment of the present disclosure;
FIG. 11 is a diagram illustrating a threshold setting screen displayed by an inspection apparatus, according to an embodiment of the present disclosure;
FIG. 12 is a diagram illustrating a detail setting screen displayed in a pop-up manner according to an embodiment of the present disclosure; and
FIG. 13 is a diagram illustrating an inspection exclusion region setting screen displayed by an inspection apparatus, according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An inspection apparatus and an inspection method performed by the inspection apparatus according to embodiments of the present disclosure are described below with reference to the drawings.

### Overview of Process

A printing system according to the present embodiment actually reads a printed matter with a reading device, such as a sensor, and generates an image to be inspected (an example of the first image to be inspected, may be also referred to as an inspection image). Then, the printing system compares the image with a master image generated from print data formed on the printed matter as the image to determine whether the printed matter has been output in the expected quality. In the case where a degree of difference between the inspection image and the master image is determined to be equal to or greater than a certain value (i.e., a defect is present), the difference is likely to be caused either by some kind of failure occurred in the printing process or by a defect such as dust present in the reading device. However, since an operator does not know whether the detected defect is caused in the printing process or by the defect such as the dust present in the reading device, the operator sometimes has to clean the reading device. In such a case, the productivity of producing a printed matter decreases. When a defect is detected, in order to instruct the operator an appropriate maintenance method, the printing system is required to determine whether the defect is caused in the reading process or the printing process.

In view of the above, the printing system according to the present embodiment detects a defect in the reading device without actually reading the printed matter (referred to as "without sheet passage" in the following description), and sets a region surrounding the position where the defect is detected as an inspection exclusion region.

The printing system generates an inspection image without sheet passage. The generated image is an example of the second image to be inspected (inspection image). The inspection image generated without sheet passage is an image generated by the reading device reading a predetermined reference plane. In the case where a defect such as dust is not present in the reading device, the inspection image generated without sheet passage is a uniform image formed mostly of white pixels or black pixels as a whole.

The printing system detects a defect on the inspection image generated without sheet passage.

The printing system sets an inspection exclusion region including the position where the defect is detected on the inspection image generated without sheet passage. Alternatively, the operator may set the inspection exclusion region with reference to the detected defect. The printing system does not detect a defect detected during the inspection with an actual printed matter passed as a defect in the case where the defect is included in the inspection exclusion region. In addition, the operator can set the defect included in the inspection exclusion region to be displayed as a "suspected defect caused by reading failure."

On the other hand, when the amount of dust adhering to the reading device increases, the number of inspection exclusion regions also increases. When a defect not caused by the reading device is present in an inspection exclusion region (and when the inspection exclusion region is set to include the position of the defect and the operator is not notified of the defect), the risk of missing a defect also increases.

In addition, when a defect in the inspection exclusion region is displayed as a "suspected defect caused by reading failure" (and when the operator is notified of the suspected defect caused by reading failure), the operator is required to frequently check whether the defect is caused by the reading device and to clean the reading device.

In view of the above, in the present embodiment, in addition to setting the inspection exclusion region, the operator is notified of the defect to prompt the cleaning operation when a defect state of the defect detected in a detection process without sheet passage exceeds a threshold value. Accordingly, the risk of missing a defect in a detection process during actual printing caused by an increase in the number of inspection exclusion regions is prevented from increasing excessively. Further, while the frequency of the checking operation and cleaning operation performed by the operator is minimized (to the extent that the risk of missing a defect does not increase excessively), erroneous detection caused by a reading streak detected in the inspection exclusion region is prevented.

### Terminology

The inspection image is an image used for checking print quality and is an image generated by optically reading a printed matter with the reading device. The inspection image includes both an image generated by reading a printed matter and an image generated by reading a reference plane without sheet passage.

The master image is an image generated from print data that is the source of an image to be printed on a printed matter, and is an image serving as a reference for print quality.

Defect refers to a point where a standard for print quality is not satisfied, or a state where a standard is not satisfied. The defect includes both a defect that occurs on an inspection image generated by reading the printed matter and a defect that occurs on an inspection image generated by reading the reference plane without sheet passage. In the former case, the print quality is considered to have deteriorated. The deterioration of the print quality may be caused by a defect in the printing process or dust in the reading device. In the latter case, there is a possibility that dust is present in the reading device.

The inspection exclusion region is a region in which, even when a defect is detected on a printed matter inspected during execution of a print job, the defect is treated as not being detected.

The defect state is a state of a defect detected in the inspection indicated on one of several scales. Examples of the defect state include the number of defects, the width of a single defect, the length of a single defect, the area of a single defect, and the brightness value of a single defect.

### Configuration of System

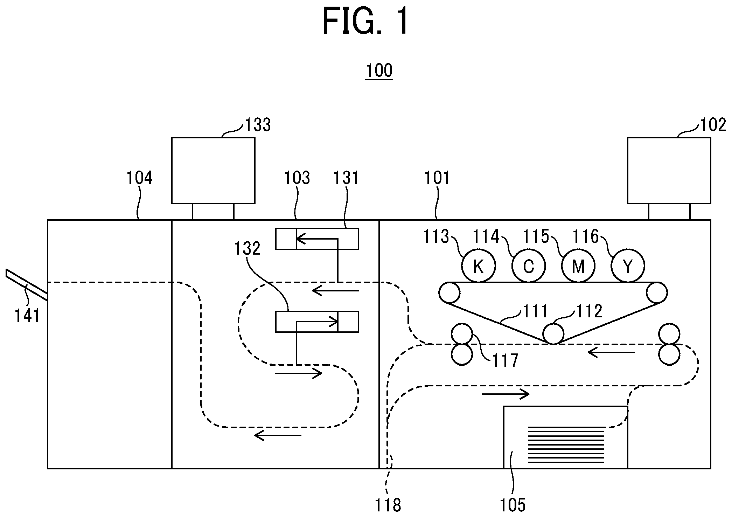

FIG. 1 is a schematic diagram illustrating a configuration of a printing system 100 according to an embodiment of the present disclosure. The configuration of the printing system 100 illustrated in FIG. 1 is given by way of example, and any configuration that can detect a defect described in the present embodiment may be used.

The printing system 100 includes a printer 101, an inspection apparatus 103, and a stacker 104. The printing system 100 may be referred to as, for example, an image forming apparatus, an image forming system, or a multifunction peripheral/printer/product (MFP). All or two of the printer 101, the inspection apparatus 103, and the stacker 104 may be integrated into one apparatus. The printer 101 is an apparatus that receives data such as characters, images, or graphics, and prints images on, for example, a sheet based on the data. The printer 101 may also be referred to as a printing apparatus.

On the top face of the printer 101, an operation panel 102 of the printer 101 is disposed. The operation panel 102 includes a display (touch panel) and a keyboard, and displays an operation screen. The operation panel 102 displays an operation screen for operating the printing system 100 and receives various kinds of operations from the operator.

The printer 101 receives a print job that includes a raster image processing (RIP) image from an external device such as a digital front end (DFE) to be described later or a personal computer (PC), or receives an instruction to execute a print job stored in the printer 101. In the present embodiment, the RIP image is assumed to be formed in 8 bits for each of cyan, magenta, yellow, and black (CMYK) colors, as an image of 600 dots per inch (dpi).

The printer 101, in accordance with the contents of a print job instructed to be executed, acquires a sheet from a sheet feeder 105 and conveys the sheet along a path indicated by a dotted line in FIG. 1. The printer 101 forms an image on the sheet using drums 113, 114, 115, and 116. The toner images of black (K), cyan (C), magenta (M), and yellow (Y) formed on the drums 113, 114, 115, and 116, respectively, are superimposed on a belt 111 to form a full-color toner image. Then, the full-color toner image is transferred onto the sheet conveyed to a roller 112 and fixed onto the sheet by a roller pair 117 using heat and pressure. In the case of single-sided printing, the sheet is ejected to the inspection apparatus 103 without any further operation. In the case of double-sided printing, the sheet is reversed in a reverse path 118 and conveyed to the roller 112. Then, another full-color toner image formed by the drums 113, 114, 115, and 116 is also transferred and fixed onto the back side of the sheet and the sheet is ejected to the inspection apparatus 103.

The inspection apparatus 103 is an apparatus for inspecting the print quality of the printed matter output by the printer 101. The inspection apparatus 103 includes an operation panel 133 of the inspection apparatus 103. The functions of the operation panel 133 may be the same as those of the operation panel 102. The inspection apparatus 103 may not include the operation panel 133, and the operation panel 102 of the printer main body may also serve as the operation panel 133. Alternatively, the operation panel 133 of the inspection apparatus 103 may be a PC connected via, for example, a local area network (LAN). In this case, the PC displays the inspection result using, for example, a web browser or a dedicated application.

The inspection apparatus 103 separately reads an image on each side of the sheet ejected from the printer 101 using reading devices 131 and 132, conveys the sheet along the path in a direction indicated by arrows, and ejects the sheet to the stacker 104. Each of the reading devices 131 and 132 is an example of reading means, which may be implemented by a sensor. In the present embodiment, the image read by each of the reading devices 131 and 132 is assumed to be formed in 8 bits for each of red, green, and blue (RGB) colors as an image of 200 dpi.

The stacker 104 stacks the sheet ejected from the inspection apparatus 103 on a tray 141.

### Digital Front End (DFE)

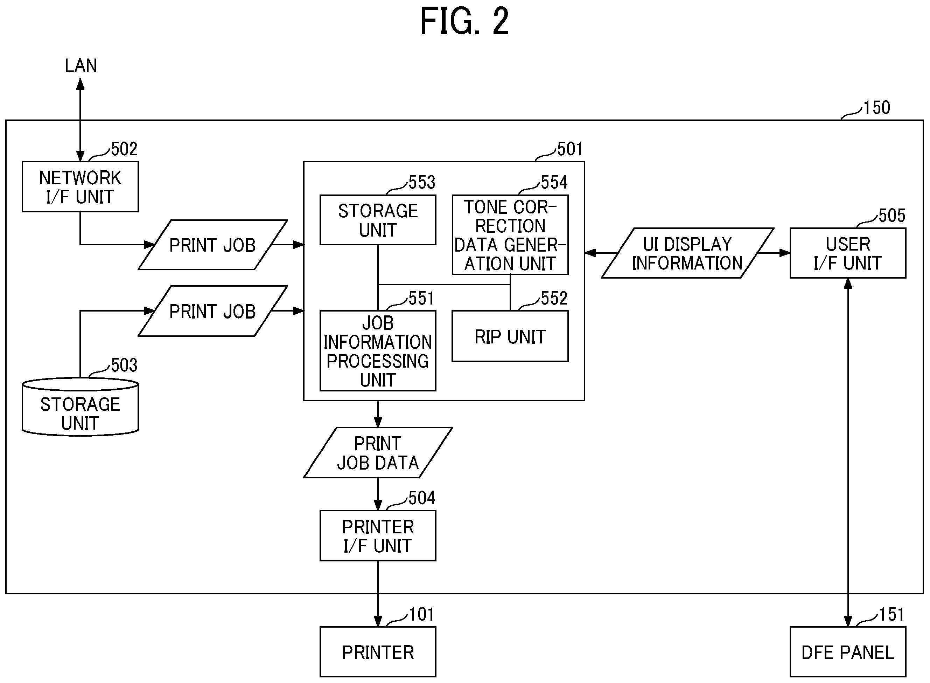

With reference to FIG. 2, a digital front end (DFE) 150 is described below. The digital front end (DFE) is a general term representing devices that process data to be input to a printer. The DFE 150 generates RIP data to be printed by the printer 101 from print data such as POSTSCRIPT data.

FIG. 2 is a block diagram illustrating a configuration of the DFE 150 according to an embodiment of the present disclosure. To the DFE 150, the printer 101 in FIG. 1 and a DFE panel 151 for displaying a user interface are connected. The DFE panel 151 is a user interface that includes a display (touch panel) and a keyboard.

The DFE 150 includes a system control unit 501, a network interface (I/F) unit 502, a user I/F unit 505, a storage unit 503, and a printer I/F unit 504. In one example, these units provide functions implemented by circuitry such as a CPU of the DFE 150 executing instructions included in one or more programs installed in the DFE 150.

The user I/F unit 505 of the DFE 150 generates a screen to be displayed on the DFE panel 151 using user interface (UI) display information, and causes the DFE panel 151 to display the screen. The UI display information includes multiple display components that form the screen and the arrangement thereof.

The network I/F unit 502 of the DFE 150, which is implemented by an interface circuit, is a communication interface for communication to connect the DFE 150 to the LAN. The network I/F unit 502 receives a print job through the LAN and transmits the print job to the system control unit 501.

Alternatively, the print job may be stored in the storage unit 503 that is implemented by any desired memory, and the system control unit 501 acquires the print job from the storage unit 503. In other words, the system control unit 501 may receive the print job via the network I/F unit 502 or may acquire the print job from the storage unit 503.

The DFE 150 includes the system control unit 501. The system control unit 501 controls the entire operation of the DFE 150. The system control unit 501 includes a job information processing unit 551, a RIP unit 552, a storage unit 553, and a tone correction data generation unit 554.

The job information processing unit 551 manages, as job management information relating to the print job, the status of the print job, the input of the print job to the printer 101, and the progress of the print job (obtained from the printer 101) in the storage unit 553, for example. The job information processing unit 551 inputs print job data to the printer 101 together with the job management information and the data of the RIP image. In the storage unit 553, the print job data relating to the print job (e.g., a job identification (ID), a file name, a job registration date and time, a job owner) is stored.

The tone correction data generation unit 554 adjusts the print data so that an image is printed based on the print data with the same tone, density, and color as those of the original document. For example, the tone correction data generation unit 554 strengthens or weakens the tone, increases or decreases the density, or increases or reduces warm colors or blue colors.

The RIP unit 552 generates RIP data to be printed by the printer 101 from print data such as POSTSCRIPT data. The RIP data is dot data (whether dots are formed) of the toner of each color.

The printer I/F unit 504 of the DFE 150, which may be implemented by an interface circuit, is an interface for communicating with the printer 101. The printer I/F unit 504 transmits the print job data determined to be input by the system control unit 501 to the printer 101.

### Printer

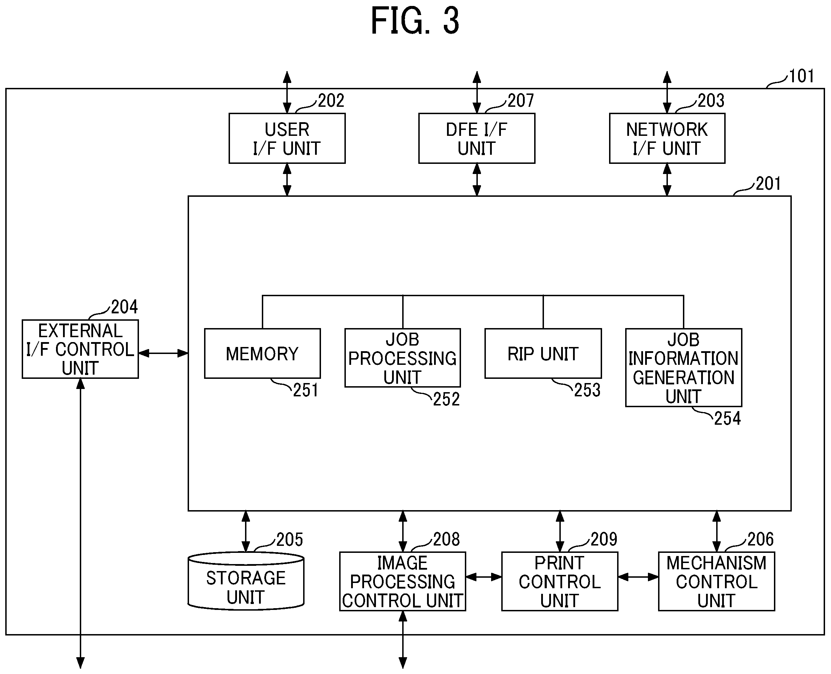

FIG. 3 is a block diagram illustrating a configuration of the printer 101 according to an embodiment of the present disclosure. The printer 101 includes a system control unit 201, a user I/F unit 202, a DFE I/F unit 207, a network I/F unit 203, an external I/F control unit 204, a storage unit 205, an image processing control unit 208, a print control unit 209, and a mechanism control unit 206. In one example, these units provide functions implemented by circuitry such as a CPU of the printer 101 executing instructions included in one or more programs installed in the printer 101.

The system control unit 201 controls the entire operation of the printer 101. To the system control unit 201, the user I/F unit 202, the DFE I/F unit 207, the network I/F unit 203, the external I/F control unit 204, the storage unit 205, the image processing control unit 208, the print control unit 209, and the mechanism control unit 206 are connected.

The user I/F unit 202 is an interface for connecting the system control unit 201 and the operation panel 102 illustrated in FIG. 1.

The DFE I/F unit 207, which may be implemented by an interface circuit, is an interface for enabling communication (for example, reception of print job data) between the system control unit 201 and the DFE 150 illustrated in FIG. 2.

The network I/F unit 203, which may be implemented by an interface circuit, is an interface for connecting the system control unit 201 to a network such as the LAN and allowing the printer 101 to communicate with devices on the network.

The external I/F control unit 204, which may be implemented by an interface circuit, is an interface through which the printer 101 communicates with other devices (such as the inspection apparatus 103 and the stacker 104).

The storage unit 205 is a storage device implemented by, for example, a hard disk drive (HDD) or a solid state drive (SSD). In the storage unit 205, for example, the print job data is stored.

The mechanism control unit 206 controls the operation of each mechanism in the printer 101, such as sheet conveyance, an image transfer process, and control of double-sided or single-sided printing in the printer 101.

The print control unit 209 instructs the mechanism control unit 206 to control the timing of each mechanism, and also controls the entire operation of image formation on the sheet. The image processing control unit 208 processes the image transferred by the mechanism control unit 206.

The system control unit 201 includes a memory 251, a job processing unit 252, a RIP unit 253, and a job information generation unit 254. The memory 251 is a memory used as a work area for the system control unit 201. In response to receiving the print job data from the DFE 150, the job information generation unit 254 generates, for example, a job ID used in the printer, a reception date and time, and progress, and stores the generated information in the storage unit 205. The RIP unit 253 executes the raster image processing on the print data in the case where the raster image processing has not been executed on the print job. The job processing unit 252 inquires of the print control unit 209 about the availability for print jobs, and determines a print job to be executed from among the print job data stored in the storage unit 205, for example, according to priority.

### Inspection Apparatus

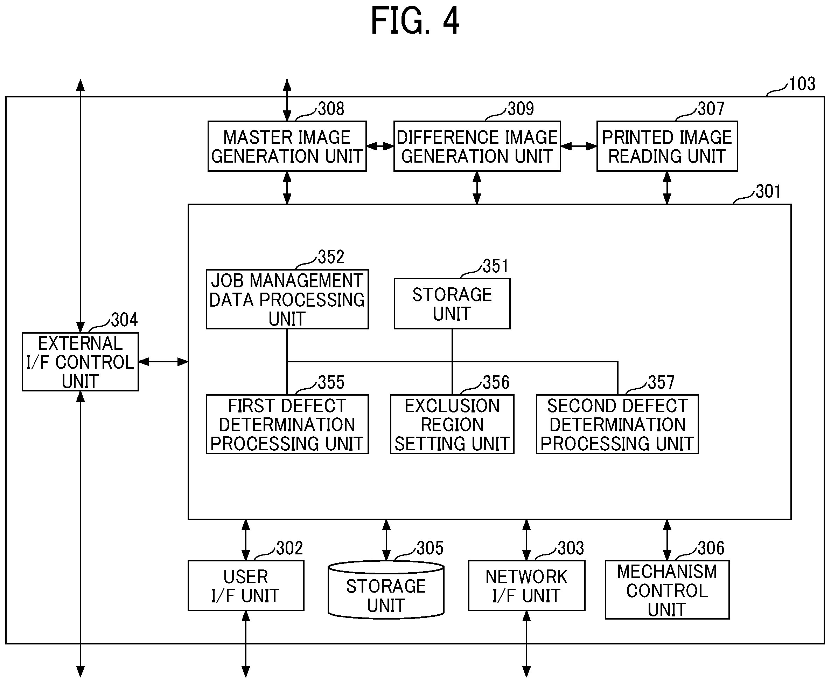

FIG. 4 is a block diagram illustrating a configuration of the inspection apparatus 103 according to an embodiment of the present disclosure. The inspection apparatus 103 includes a system control unit 301, a master image generation unit 308, a difference image generation unit 309, a printed image reading unit 307, an external I/F control unit 304, a user I/F unit 302, a storage unit 305, a network I/F unit 303, and a mechanism control unit 306. In one example, these units provide functions implemented by circuitry such as a CPU of the inspection apparatus 103 executing instructions included in one or more programs installed in the inspection apparatus 103.

The system control unit 301 controls the entire operation of the inspection apparatus 103. To the system control unit 301, the master image generation unit 308, the difference image generation unit 309, the printed image reading unit 307, the external I/F control unit 304, the user I/F unit 302, the storage unit 305, the network I/F unit 303, and the mechanism control unit 306 are connected.

The user I/F unit 302 is an interface for connecting the system control unit 301 and the operation panel 133 illustrated in FIG. 1. The user I/F unit 302 causes the operation panel 133 to display the information of the system control unit 301. In the case where a position of a defect detected in the detection process during actual printing overlaps with an inspection exclusion region, the user I/F unit 302 displays the defect as a suspected defect caused by reading failure in a manner different from the manner for displaying an ordinary defect.

The network I/F unit 303, which may be implemented by an interface circuit, is an interface for connecting the system control unit 301 to a network such as the LAN.

The external I/F control unit 304, which may be implemented by an interface circuit, is an interface for connection with other devices (for example, the printer 101 and the stacker 104).

The mechanism control unit 306 controls the operation of each mechanism of the inspection apparatus 103, such as sheet conveyance, reading of both sides or one side of a sheet, and ejection of a sheet.

The storage unit 305 is a storage device implemented by, for example, an HDD or an SSD. In the storage unit 305, for example, an inspection image, a difference image, a master image, and an inspection result are stored. In the storage unit 305, the inspection exclusion region is also stored.

The printed image reading unit 307 reads both sides of the sheet conveyed from the printer 101 with the reading devices 131 and 132, and outputs an inspection image. The printed image reading unit 307 generates an inspection image in both the detection process during actual printing and the detection process without sheet passage, which will be described later. The detection process during actual printing is a process in which a printed matter is inspected during the execution of a print job. The detection process without sheet passage is a process in which a defect in the reading device 131 or 132 is detected before execution of a print job starts.

In the detection process during actual printing, the master image generation unit 308 generates a master image from the RIP image transmitted by the DFE 150. This RIP image is generated from the print data to be formed on the sheet as an image.

In the detection process during actual printing, the difference image generation unit 309 generates a difference image between the master image and the inspection image. The difference image is an image that represents the difference in pixel value for each pixel between the master image and the inspection image. Since the RIP image is generated from the print data to be formed on the sheet as an image and the inspection image is generated by reading the printed matter, the pixel value of the difference image should be smaller than a threshold value under normal conditions.

The system control unit 301 includes a storage unit 351, a job management data processing unit 352, a first defect determination processing unit 355, a second defect determination processing unit 357, and an exclusion region setting unit 356.

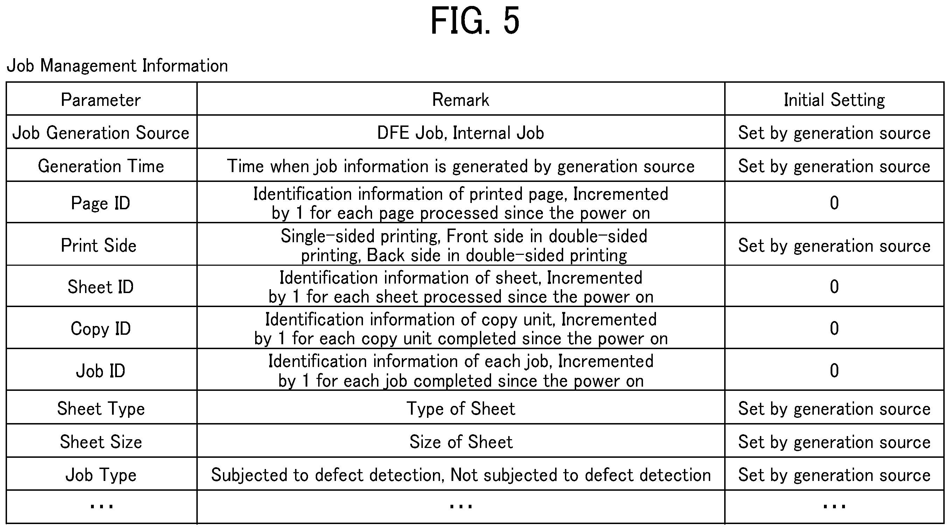

In the detection process during actual printing, the system control unit 301 receives print management information (included in the job management information) via the external I/F control unit 304, and stores the print management information in the storage unit 351 of the system control unit 301. The job management data processing unit 352 extracts post-processing device information from the job management information illustrated in FIG. 5 and transmits, via the external I/F control unit 304, the post-processing device information to the stacker 104 that is a post-processing device operating at a stage subsequent to the operation of the inspection apparatus 103. The job management data processing unit 352 reads out the print management information from the storage unit 351. The job management data processing unit 352 transfers the print management information to the master image generation unit 308, the difference image generation unit 309, the printed image reading unit 307, and the mechanism control unit 306 in order for the master image generation unit 308, the difference image generation unit 309, the printed image reading unit 307, and the mechanism control unit 306 to process the print job. The print management information to be transferred is the job management information illustrated in FIG. 5 from which the post-processing device information is removed.

In the detection process during actual printing, the system control unit 301 causes the storage unit 351 to store the inspection image and the difference image, and notifies the first defect determination processing unit 355 of the storage. The first defect determination processing unit 355 performs defect determination on the difference image according to a threshold value determined in advance for defect determination. The first defect determination processing unit 355 performs, for example, edge detection on the difference image to detect an edge having an intensity higher than the threshold value for defect determination. The edge to be detected may be of any shape, such as a dot or a line.

In the detection process without sheet passage, the system control unit 301 causes the storage unit 351 to store the inspection image and notifies the second defect determination processing unit 357 of the storage. The second defect determination processing unit 357 performs defect determination on the inspection image according to the threshold value determined in advance for defect determination. In the case where the defect such as dust is not present in the reading device, the inspection image generated in the detection process without sheet passage is a uniform image formed mostly of white pixels or black pixels to the whole. The master image is an image in which white or black pixels are formed over the entire face. Alternatively, the master image may not be required. The second defect determination processing unit 357 performs edge detection on the inspection image to detect an edge having an intensity higher than the threshold value for defect determination. The edge to be detected may be of any shape, such as a dot or a line.

The exclusion region setting unit 356 excludes the position of the defect detected by the second defect determination processing unit 357 or the position of the defect set by the operator from the region where the first defect determination processing unit 355 detects a defect. In other words, the exclusion region setting unit 356 sets an inspection exclusion region, which is a region excluded from detection of a defect by the first defect determination processing unit 355, so that the position of the defect detected by the second defect determination processing unit 357 is included in the inspection exclusion region. Accordingly, the position of the defect detected by the second defect determination processing unit 357 is not subject to the detection by the first defect determination processing unit 355.

FIG. 5 is a diagram illustrating an example of the job management information according to an embodiment of the present disclosure. This job management information is used for the case where the printer 101 executes an ordinary printing process (i.e., the detection process during actual printing). In the printing process, print data is generated for an individual page by at least one of the DFE 150 and the printer 101. The print job is processed based on the job management information.

The job management information includes, as data items, a parameter, a remark, and an initial setting. The parameter is the name of an item. The remark is an explanation of the parameter. The initial setting indicates the setting when the system control unit 201 of the printer 101 receives the parameter.

A job generation source is information indicating a source that outputs a job. In the job generation source, information indicating whether the job is a print job input from the DFE 150 or internal data of the printer 101 is included.

A generation time is information indicating the date and time when the job generation source has generated the job.

A page ID is the identification number of a printed page. The page ID is incremented by one for each page processed since the power supply is turned on. A numerical value is set to the page ID when printing is executed.

A print side identifies whether the print job is single-sided printing or double-sided printing. In the case where the print job is identified to be double-sided printing, the print side identifies whether a side on which an image is to be printed is the front side (double-sided front) or the back side (double-sided back) of the sheet.

A sheet ID is identification information of a sheet used for printing. In the case of double-sided printing, the page IDs of pages printed on the same sheet have the same sheet ID. The sheet ID is incremented by one for each sheet processed since the power supply is turned on. A numerical value is set to the sheet ID when printing is executed.

A copy ID is identification information for each copy unit. The copy ID is incremented by one each time the output of a copy unit is completed since the power supply is turned on. A numerical value is set to the copy ID when printing is executed.

A job ID is identification information for each job. The job ID is incremented by one each time the output of a job is completed since the power supply is turned on. A numeric value is set to the job ID when printing is executed.

A sheet type is information on a type of sheet used for printing. A sheet size is information on a size of the sheet. A job type indicates whether the print job is a print job subject to defect detection or a print job not subject to defect detection, or whether the print job involves an insertion sheet used for identifying defect detection.

### Defect Detection Process

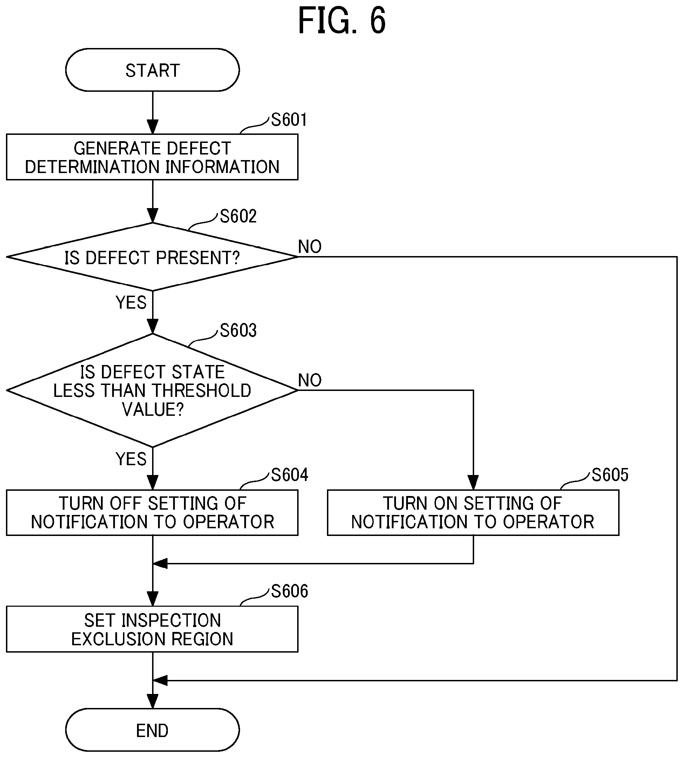

FIG. 6 is a flowchart of the processing executed after completion of the detection process without sheet passage, according to an embodiment of the present disclosure. The processing of FIG. 6 is executed after the detection process without sheet passage is executed and the second defect determination processing unit 357 executes a defect detection process on the inspection image. In the detection process without sheet passage, the printed image reading unit 307 generates an inspection image in a state where no sheet is conveyed. In the case where a defect is present on the inspection image, it is highly likely that the defect (e.g., dirt) is caused by the reading device 131 or 132.

First, the second defect determination processing unit 357 generates defect determination information (S601). The second defect determination processing unit 357 performs defect determination on the inspection image based on a threshold value determined in advance for defect determination, and generates defect determination information including the following information.
- Number of defects detected when the detection process without sheet passage is executed.
- Positions of the defects when the detection process without sheet passage is executed.

The second defect determination processing unit 357 determines whether a defect is present based on the defect determination information, and detects a defect state when a defect is determined to be present (S602). In the case where a defect is determined not to be present (NO in S602), the processing of FIG. 6 ends.

In the case where a defect is determined to be present (YES in S602), the second defect determination processing unit 357 determines whether the defect state of the detected defect is less than the threshold value (S603). The defect state is determined based on, for example, the following items.
(i) For example, the defect state is determined based on the number of defects. The threshold value to which the number of defects is compared can be set by the operator (e.g., a notification is given when the number of defects is 10 or more).
(ii) As another example, the defect state is determined by a combination of multiple conditions. For example, a notification is given when the number of defects having a region with the width of 3 pixels or more is 10 or more. In this case, the threshold values of the width of a region of a defect and the number of defects can be set by the operator.

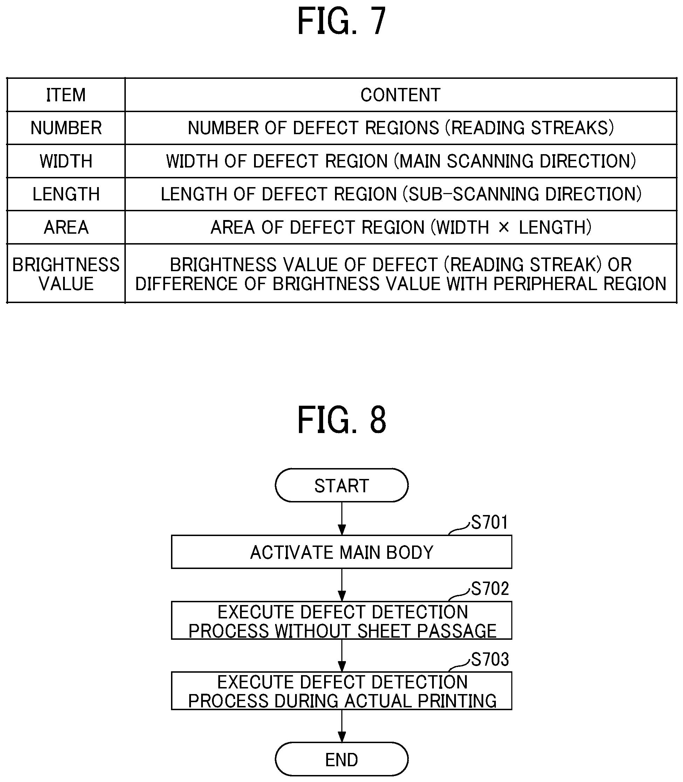

In addition, as illustrated in FIG. 7, the defect state may be determined based on several items. FIG. 7 is a diagram illustrating an example of items used for determining a defect state. In addition to the width of a region of a defect and the number of defects described above, a length, an area, and a brightness value of a defect may be used for determining the defect state.
- The number of defects is the number of defect regions. A defect region is typically represented by a streak, but may be represented by a defect of a different shape.
- The width of a defect is the width of the defect region. The width may be, for example, the length of the circumscribed rectangle of the defect region in the main scanning direction.
- The length of a defect is the length of the defect region. The length may be, for example, the length of the circumscribed rectangle of the defect region in the sub-scanning direction.
- The area of the defect is the area (width × length) of the defect region.
- The brightness value of a defect refers to a pixel value (RGB values) of the defect, and may be, for example, an average, median, or maximum value of the RGB values. Alternatively, the brightness value may be a difference between the pixel value of the defect region and the pixel value of the non-defective region.

In the case where the result of the determination in step S603 is YES (YES in S603), the user I/F unit 302 turns off the setting of the notification to the operator (S604). The turning off means that an abnormality is not notified. In the case where the result of the determination in step S603 is NO (NO in S603), the user I/F unit 302 turns on the setting of the notification to the operator (S605). The turning on means that an abnormality is notified. Accordingly, the abnormality means that a serious abnormality is detected in the detection process without sheet passage.

In step S605 in which the setting of the notification to the operator is turned on, the abnormality is notified based on the threshold value set by the operator. Accordingly, the notification is given according to a level of the risk of missing a defect tolerable to the operator and the risk of missing a defect is prevented from increasing. When the user I/F unit 302 notifies the operator of the abnormality and the operator cleans the reading device, the processing (setting of the inspection exclusion region) of FIG. 6 may be executed again. Depending on the type of the printer 101, in a certain type of printer, the "detection process without sheet passage" is executed even when the door of the printer is closed after cleaning. In other words, since the operations are performed in the order of opening the door, cleaning by the operator, and closing the door, the processing of FIG. 6 is necessarily executed in such a type of the printer 101 after the cleaning. As a result, since the inspection exclusion region is set after the cleaning, the amount of dust adhering to the reading device is prevented from increasing and the risk of missing a defect due to an increase in the number of inspection exclusion regions is prevented from increasing.

The technique in the art has an issue that the operator needs to clean the reading part in order to eliminate a defect caused by the reading part. In other words, when the source of the dirt is determined to be the exposure glass or the white reference plate, the operator needs to clean the exposure glass or the white reference plate in any case.

Through steps S603 to S605, the frequency of the checking operation and cleaning operation performed by the operator is minimized, and the risk of missing a defect is prevented from increasing. In other words, the region where a defect is detected is set as the inspection exclusion region. When a noticeable defect caused by the reading device 131 or 132 is determined to be present in the inspection exclusion region according to the result of the determination in S603, the operator is prompted to clean the reading device in advance. Accordingly, the number of inspection exclusion regions is prevented from increasing, and the risk of missing a defect when a defect not caused by the reading device 131 or 132 is present in the inspection exclusion region is prevented from increasing. Further, since the defect in the inspection exclusion region is excluded from the inspection, the frequency of the operations to check whether the defect is caused by the reading device and clean the reading device is reduced.

In step S606, in the case where the preset manual adjustment for the inspection exclusion region is invalid, the exclusion region setting unit 356 sets a region surrounding the position where the defect is detected as the inspection exclusion region (S603). By excluding the position of the defect detected in the detection process without sheet passage from the region where the defect is detected when the detection process during actual printing is executed, cleaning for preventing the detection of the defect caused by the reading device 131 or 132 is obviated or the frequency of cleaning is reduced. Also, erroneous detection to detect a reading streak (a defect caused by the reading device 131 or 132) as a defect is prevented.

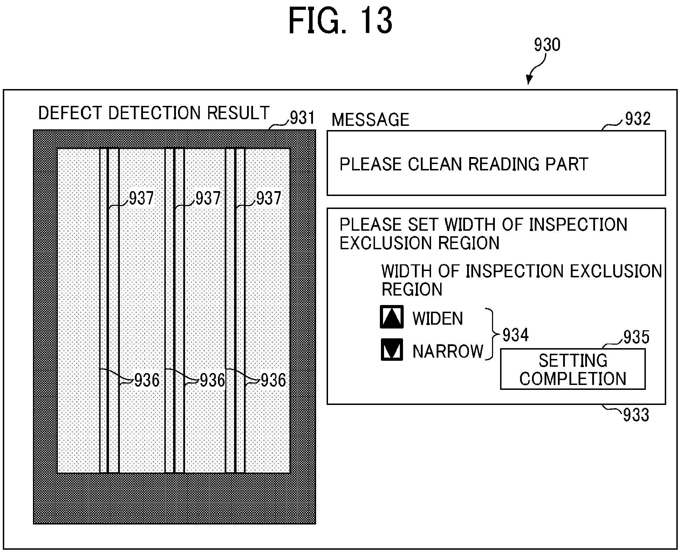

In the case where the preset manual adjustment for the inspection exclusion region is valid, an inspection exclusion region setting screen is displayed. The inspection exclusion region setting screen is given by way of example in FIG. 13. The user I/F unit 302 causes the inspection exclusion region set to include the detected defect to be displayed. The operator operates the inspection exclusion region setting screen to adjust the inspection exclusion region. In addition, the operator can select whether to cause the defect in the inspection exclusion region to be displayed as a suspected defect caused by reading failure. The exclusion region setting unit 356 sets the inspection exclusion region set by the operator as the inspection exclusion region. The position of the defect may vary slightly. For this reason, by the operator designating the exclusion region with a margin in area, the position of the defect is prevented from being excluded from the inspection exclusion region.

FIG. 8 is a flowchart of the processing for registering an inspection exclusion region according to an embodiment of the present disclosure. The processing of FIG. 8 is executed, for example, when the power supply of the inspection apparatus 103 is turned on and the main body is activated (S701).

The system control unit 301 of the inspection apparatus 103 executes the detection process without sheet passage in response to an operation of the operator or automatically (S702). In other words, before actual printing starts using an actual print job, the system control unit 301 executes the detection process without sheet passage to detect a defect in the reading devices 131 and 132.

After the detection process without sheet passage is executed, the processing of FIG. 6 is executed. The system control unit 301 resets the inspection exclusion region registered in step S606 before the inspection exclusion region setting screen of step S606 is displayed to the operator. Then, the exclusion region setting unit 356 registers the inspection exclusion region set in step S606. The detection process without sheet passage may be executed after the actual printing is executed.

When the detection process without sheet passage is completed, the system control unit 301 executes the detection process during actual printing (S703). In the detection process during actual printing, even when a defect is detected in the registered inspection exclusion region, the first defect determination processing unit 355 does not treat the defect as a defect (i.e., deterioration in print quality). In the detection process during actual printing, since a defect caused by the reading device 131 or 132 is excluded from the detection targets, cleaning for preventing the detection of the defect is obviated or the frequency of cleaning is reduced.

In the present embodiment, even when a defect is detected in the inspection exclusion region, the defect is not treated as a defect. In addition, when the inspection exclusion region stored in the storage unit 351 by the second defect determination processing unit 357 overlaps with the position of the defect detected by the first defect determination processing unit 355, the first defect determination processing unit 355 determines the defect to be a suspected defect caused by reading failure. In this way, the operator can check whether the defect is caused by the reading device 131 or 132.

### Notification of Defect Detection to Operator

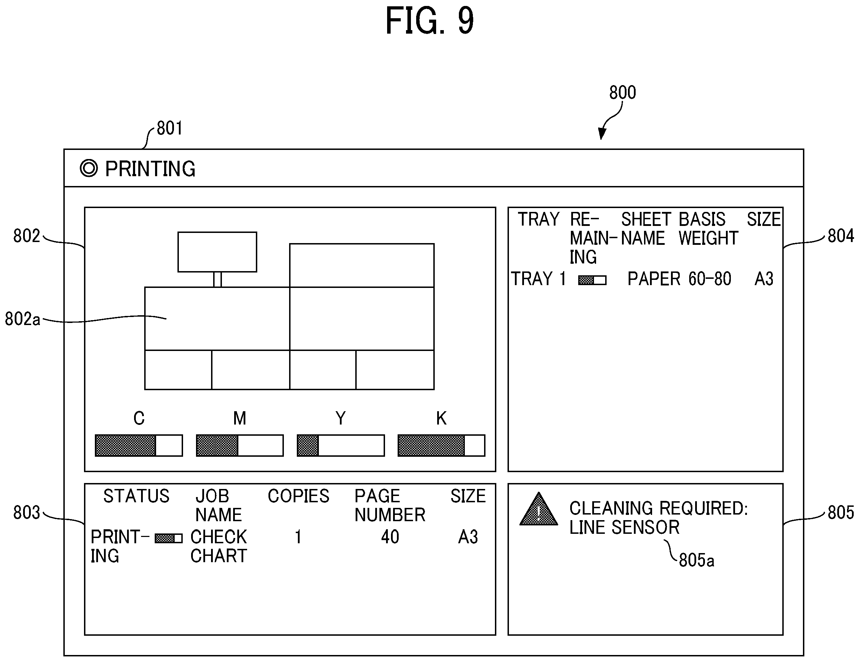

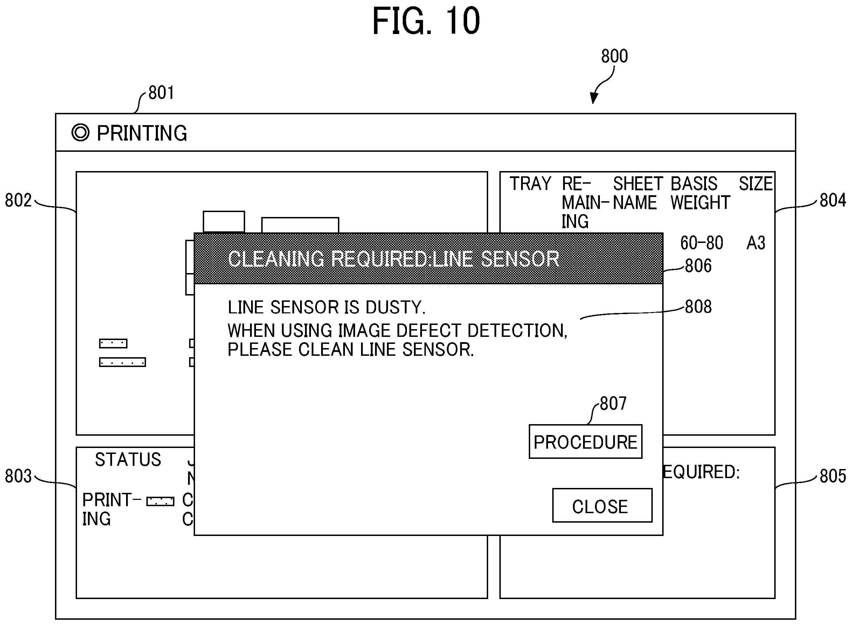

A case of notifying the operator of the defect detection is described below with reference to FIGS. 9 and 10. FIG. 9 is a diagram illustrating a status display screen 800 displayed by the inspection apparatus 103, according to an embodiment of the present disclosure. The status display screen 800 of FIG. 9 is displayed in step S604 of FIG. 6.

In a status field 801 on the status display screen 800, the status of the printing system 100 (e.g., under adjustment, printing) is indicated. In a field 802, the machine configuration of the printing system 100 is displayed together with an appearance model 802a. The machine configuration refers to a connection state of peripheral devices such as a finisher. When an event occurs, such as a sheet jam, the location where the event has occurred is highlighted in the appearance model. For example, the location where the sheet jam has occurred turns red, and when the operator taps the location in the appearance model, the procedure for clearing the sheet jam is displayed. In the field 802, the remaining amount of toner of each color is displayed. When the toner reaches the near end state, for example, an icon for prompting the replacement of the toner cartridge is displayed. When the operator taps the icon, a message prompting the operator to check the stock of the toner cartridge may be displayed, or a procedure for replacing the toner cartridge may be displayed.

In a field 803, the status of a job currently being executed is indicated. The status of a job includes, for example, a status, the number of copies, the number of pages, and the sheet size. In a field 804, the sheet setting set for an individual tray is indicated. The sheet setting includes information on the sheet stored in the tray, such as the number of remaining sheets, the name of the sheet, the basis weight, and the size for an individual tray.

A field 805 is a filed used for displaying a notification to the operator. In the field 805, a notification indicating an error or the need for maintenance, including detection of a defect in the detection process without sheet passage, is displayed. In FIG. 9, a case where it is determined that "the defect state has exceeded the threshold value" is illustrated. In the field 805, an error message 805a of "CLEANING REQUIRED: LINE SENSOR" is displayed to prompt the operator to clean the dust adhering to the sensor. Further, a message such as "a suspected defect caused by reading failure" may be displayed to notify the operator of the possibility of the occurrence of erroneous detection of a defect caused by the reading device 131 or 132.

FIG. 10 is a diagram illustrating another example of an error message displayed on the status display screen 800, according to an embodiment of the present disclosure. In FIG. 10, a case where a defect notification is displayed in a pop-up manner. In FIG. 10, a message box 806 is displayed in a pop-up manner on the status display screen 800 when "the defect state has exceeded the threshold value." In the message box 806, the title "CLEANING REQUIRED: LINE SENSOR" and a message 808 indicating "LINE SENSOR IS DUSTY. WHEN USING IMAGE DEFECT DETECTION, PLEASE CLEAN LINE SENSOR" are displayed. The operator can know that the line sensor should be cleaned.

Further, the message box 806 includes a procedure button 807, which allows the operator to cause a specific procedure for cleaning to be displayed. For example, when the procedure button 807 is pressed, a moving image presenting the procedure for cleaning the line sensor is displayed.

When the error message is pressed in the field 805 of FIG. 9, the message box of FIG. 10 may be displayed in a pop-up manner.

Further, the inspection apparatus 103 may notify the smartphone or wearable device (of a watch type, an eyeglass type, or a neck-worn type) of the error message by, for example, electronic mail or wireless communication.

### Threshold Value for Determining whether to Notify Operator of Defect State

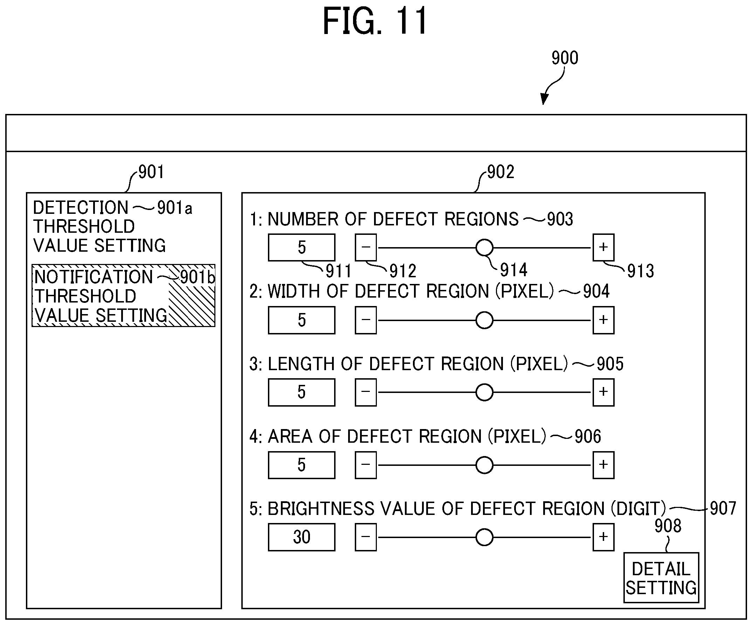

A method of setting a threshold value for the user I/F unit 302 to determine whether to notify the operator of a defect state is described below with reference to FIG. 11. FIG. 11 is a diagram illustrating a threshold setting screen 900 displayed by the inspection apparatus 103, according to an embodiment of the present disclosure. The threshold setting screen 900 includes a threshold type selection field 901 and a threshold setting field 902. In the threshold type selection field 901, the operator can select a threshold setting 901a for detecting dust in the reading devices 131 and 132, and a threshold setting 901b for determining whether to notify the operator. In FIG. 11, it is assumed that the threshold setting 901b for determining whether to notify the operator is selected. In response to the selection, the items in the threshold setting field 902 are switched, and the current set values in the threshold setting 901b for determining whether to notify the operator are displayed.

In the threshold setting field 902, a set value field 911, a minus button 912, a plus button 913, and a slider 914 are displayed for each of the items of a number of defect regions 903, a defect region width 904, a defect region length 905, a defect region area 906, and a defect brightness value 907. The operator can adjust the set value by operating the mouse or the touch panel to move the slider 914 or to press the minus button 912 or the plus button 913. Also, the operator can directly input a numerical value in the set value field 911.

The threshold setting field 902 includes a detail setting button 908. The detail setting button 908 is a button for displaying a detail setting screen 920 used for setting a defect to be detected in the defect determination process in the inspection exclusion region. The detail setting screen 920 receives the setting of the type of defect to be detected in the inspection exclusion region even in the inspection exclusion region.

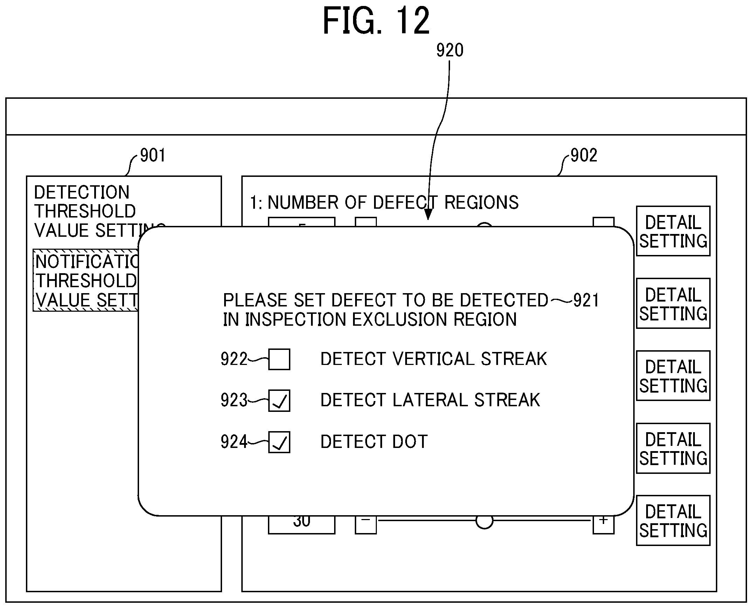

FIG. 12 is a diagram illustrating the detail setting screen 920 displayed in a pop-up manner according to an embodiment of the present disclosure. The detail setting screen 920 includes check boxes 922 to 924 corresponding to "detect a vertical streak," "detect a lateral streak," and "detect a dot," respectively. The "dot" is a defect in the form of a small dot. The operator can set the types of defects to be detected in the inspection exclusion region. For example, when the operator excludes (does not check) the "vertical streak" from the detection targets but does not exclude (checks) the "lateral streak" and the "dot," the first defect determination processing unit 355 can ignore the defect such as the vertical streak that is likely to be caused by the dust in the reading device 131 or 132 as a streak (reading streak) caused in the reading process. On the other hand, defects such as the "lateral streak" and the "dot," which are defects different from the reading streak that is a detect likely to be caused by the dust in the reading device 131 or 132, can be detected without being missed even when the detects are present in the inspection exclusion region.

### Message for Prompting Cleaning and Inspection Exclusion Region Setting Screen

FIG. 13 is a diagram illustrating an inspection exclusion region setting screen 930 displayed by the inspection apparatus 103, according to an embodiment of the present disclosure. The inspection exclusion region setting screen is displayed in step S606 of FIG. 6.

On the inspection exclusion region setting screen 930, a defect detection result 931 is displayed. The defect detection result 931 is a part or the entirety of the inspection image generated in the detection process without sheet passage. The positions where defects are detected are surrounded by red frames 936. The inspection exclusion region is also set within each of the red frames 936 (for example, a region surrounded by a red frame 936 is set as an inspection exclusion region). In FIG. 13, three streaks 937 are defects. Since the defects are present on the inspection image generated in the detection process without sheet passage, dust is assumed to be present in the reading device 131 or 132, or both.

On the inspection exclusion region setting screen 930, a prompting cleaning message 932 is also displayed. The prompting cleaning message 932 indicates, for example, "PLEASE CLEAN READING PART." When the display of a message prompting cleaning set in advance is valid, such a message is displayed.

In the case where the preset manual adjustment for the inspection exclusion region is valid, an inspection exclusion region setting field 933 is displayed. The inspection exclusion region setting field 933 is a setting field for the operator to set an inspection exclusion region where even a defect detected in the detection process during actual printing is not treated as a defect. In the inspection exclusion region setting field 933, a button 934 for adjusting the width of the inspection exclusion region and an inspection exclusion region setting completion button 935 are displayed. When the operator presses the button 934 to adjust the width of the inspection exclusion region, the region surrounded by the red frame 936 is also changed in conjunction with the adjustment. In other words, the red frame 936 surrounding the defect of a streak shape becomes narrower or thicker in conjunction with the operation of the button 934. When the operator presses the inspection exclusion region setting completion button 935, the inspection exclusion region setting screen 930 is closed. The exclusion
region setting unit 356 registers the region surrounded by the red frame 936 when the inspection exclusion region setting screen 930 is closed.

It is preferable that the position and width of the inspection exclusion region can be set by the operator according to the sheet setting. For example, the operator can designate the inspection exclusion region for each sheet size such as A4 or A3, and each sheet type such as plain paper or coated paper. Since the region where an image is formed varies depending on the size or type of sheet, the operator can set the inspection exclusion region where a detected defect is not treated as a defect according to the sheet setting.

The printing system 100 of the present embodiment sets an inspection exclusion region when the detection process during actual printing is to be executed so that a position of a defect detected in the detection process without sheet passage is included in the inspection exclusion region. Further, in addition that the printing system 100 sets the inspection exclusion region, the printing system 100 notifies the operator of the defect to prompt the cleaning operation when the defect state of the defect detected in the detection process without sheet passage is determined to exceed a threshold value. Accordingly, the risk of missing a defect in the detection process during actual printing due to an increase in the number of inspection exclusion regions is prevented from increasing excessively. Further, while the frequency of the checking operation and cleaning operation performed by the operator is minimized (to the extent that the risk of missing a defect does not increase excessively), erroneous detection to detect a reading streak in the inspection exclusion region is prevented.

### Applied Cases

The configuration according to the present embodiment illustrated in FIG. 4 is divided according to functions in order to facilitate understanding of the processing units executed by the inspection apparatus 103. No limitation to the scope of the present disclosure is intended by how the processing units are divided or by the names of the processing units. The processing units executed by the inspection apparatus 103 may be divided into a greater number of processing units in accordance with the contents of the processing units. In addition, a single processing unit can be divided to include a greater
number of processing units.

The printer 101 is not limited to a printing device employing an electrophotographic method, but may be any printing device employing, for example, an inkjet printing system, a thermal transfer system, a letterpress method, a lithographic method, an intaglio method, or a stencil method.

Alternatively, the inspection apparatus 103 and the printer 101 may be separate bodies. In this case, the operator operates the inspection apparatus 103 to read the printed matter, and stores the inspection exclusion region determined by the inspection apparatus 103 in the printer owned by the operator.

The printing system 100 is not limited to the one used for commercial printing, and may be used in, for example, an office, a factory, an ordinary home, or a convenience store.

The processing of the inspection apparatus 103 described in the present embodiments may be executed by a server apparatus connected via a network. In this case, the inspection apparatus 103 transmits the inspection image to the server apparatus, and the server apparatus transmits the inspection result to the inspection apparatus 103. The inspection apparatus 103 receives the setting of the inspection exclusion region and registers the setting in the printer owned by the operator or the server apparatus.

Each of the functions of the embodiments described above may be implemented by one or more processing circuits or circuitry. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality. There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a record medium such as a compact disc-read-only memory (CD-ROM) or digital versatile disc (DVD), and/or the memory of a field programmable gate array (FPGA) or application specific integrated circuit (ASIC).

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.
In another aspect, an image forming system includes a printed image reading unit to read a printed matter printed by a printing apparatus with a reading device to generate a first image to be inspected, a first defect determination processing unit to detect a defect on the printed matter based on a master image and the first image, the master image being generated from print data of the printed matter, a second defect determination processing unit to detect a defect on a second image to be inspected and a defect state of the defect, the second image being generated by the reading device without sheet passage, an exclusion region setting unit to set an inspection exclusion region where the first defect determination processing unit does not detect a defect, the inspection exclusion region including a position of the defect detected by the second defect determination processing unit, and a user interface (I/F) unit to notify a user when the defect state is determined to exceed a threshold value.

## Claims

1. An image forming apparatus (100) comprising:
a printed image reading unit (307) configured to read with a reading device a printed matter printed by a printing apparatus based on print data to generate a first image to be inspected;
a first defect determination processing unit (355) configured to detect a defect on the printed matter based on a master image and the first image, the master image being generated from the print data of the printed matter;
a second defect determination processing unit (357) configured to detect a defect on a second image to be inspected and a defect state of the defect, the second image being generated by the reading device without sheet passage;
an exclusion region setting unit (356) configured to set a region including a position of the defect detected by the second defect determination processing unit (357) to an inspection exclusion region to be excluded from detection of a defect by the first defect determination processing unit (355); and
a user interface unit (302) configured to notify a user in a case that the defect state is determined to exceed a threshold value,
wherein the user interface unit (302) is configured to control, in a case that the second defect determination processing unit (357) detects the defect on the second image, the display to display the position of the detected defect, **characterized in that** the user interface unit (302) is configured to control, in a case that the user interface unit (302) controls the display to display the position of the detected defect, the display to display a display component for receiving a change of the inspection exclusion region, the inspection exclusion region being excluded from the detection when inspection is performed by the first defect determination processing unit (355),
and wherein the inspection exclusion region is changeable according to a sheet setting.

2. The image forming apparatus (100) according to claim 1, wherein
the user interface unit (302) is configured to control a display to display a threshold setting screen for receiving a setting of the threshold value; and
the user interface unit (302) is configured to notify, in a case that the defect state is determined to exceed the threshold value set on the threshold setting screen, the user of an abnormality.

3. The image forming apparatus (100) according to claim 2, wherein
the defect state is a number of defects; and
the user interface unit (302) is configured to receive a setting of the threshold value for the number of defects.

4. The image forming apparatus (100) according to claim 2, wherein
the defect state is a width of the defect; and
the user interface unit (302) is configured to receive a setting of the threshold value for the width of the defect.

5. The image forming apparatus (100) according to claim 2, wherein
the defect state is a length of the defect; and
the user interface unit (302) is configured to receive a setting of the threshold value for the length of the defect.

6. The image forming apparatus (100) according to claim 2, wherein
the defect state is an area of the defect; and
the user interface unit (302) is configured to receive a setting of the threshold value for the area of the defect.

7. The image forming apparatus (100) according to claim 2, wherein
the defect state is a brightness value of the defect; and
the user interface unit (302) is configured to receive a setting of the threshold value for the brightness value of the defect.

8. The image forming apparatus (100) according to claim 1, wherein the user I/F unit (302) is configured to receive a setting of a type of defect to be detected in the inspection exclusion region.

9. An inspection method comprising:
with a reading device, reading (S601) a printed matter printed by a printing apparatus based on print data to generate a first image to be inspected;
detecting (S602) a defect on the printed matter based on a master image and the first image, the master image being generated from the print data of the printed matter;
detecting (S702) a defect on a second image to be inspected and a defect state of the defect, the second image being generated by the reading device without sheet passage;
setting (S606) a region including a position of the defect detected on the second image to an inspection exclusion region to be excluded from detection of a defect on the first image;
notifying a user of an abnormality in a case that the defect state is determined to exceed a threshold value;
in a case that a defect on the second image is detected, controlling a display to display the position of the detected defect;
**characterized in that**
in a case that the display is controlled to display the position of the detected detect controlling the display to display a display component for receiving a change of the inspection exclusion region, the inspection exclusion region being excluded from the detection when inspection is performed by detecting a defect on the printed matter based on the master image and the first image,
and wherein the inspection exclusion region is changeable according to a sheet setting.

10. A carrier medium carrying computer-readable code comprising instructions which, when executed by a computer system, cause the computer system to carry out the inspection method according to the preceding claim.

## Patentansprüche

1. Bilderzeugungsvorrichtung (100), enthaltend:
eine Druckbildleseeinheit (307), die dazu eingerichtet ist, mittels einer Lesevorrichtung ein von einer Druckvorrichtung auf Grundlage von Druckdaten gedrucktes Druckerzeugnis zu lesen, um ein erstes zu inspizierendes Bild zu erzeugen;
eine erste Fehlerbestimmungsverarbeitungseinheit (355), die dazu eingerichtet ist, auf Grundlage eines Masterbildes und des ersten Bildes einen Fehler auf dem Druckerzeugnis zu detektieren, wobei das Masterbild aus den Druckdaten des Druckerzeugnisses erzeugt wird;
eine zweite Fehlerbestimmungsverarbeitungseinheit (357), die dazu eingerichtet ist, einen Fehler in einem zweiten zu inspizierenden Bild sowie einen Fehlerzustand des Fehlers zu detektieren, wobei das zweite Bild durch die Lesevorrichtung ohne Blattdurchlauf erzeugt wird;
eine Ausschlussbereichseinstelleinheit (356), die dazu eingerichtet ist, einen Bereich, der eine Position des von der zweiten
Fehlerbestimmungsverarbeitungseinheit (357) detektierten Fehlers umfasst, als einen Inspektionsausschlussbereich festzulegen, der von der Fehlerdetektion durch die erste Fehlerbestimmungsverarbeitungseinheit (355) ausgeschlossen wird; und
eine Benutzerschnittstelleneinheit (302), die dazu eingerichtet ist, einen Benutzer in einem Fall zu benachrichtigen, dass der Fehlerzustand bestimmt wird, einen Schwellenwert zu überschreiten,
wobei die Benutzerschnittstelleneinheit (302) dazu eingerichtet ist, in einem Fall, dass die zweite Fehlerbestimmungsverarbeitungseinheit (357) den Fehler im zweiten Bild detektiert, die Anzeige so zu steuern, dass die Position des detektierten Fehlers angezeigt wird,
**dadurch gekennzeichnet, dass** die Benutzerschnittstelleneinheit (302) dazu eingerichtet ist, in einem Fall, dass die Benutzerschnittstelleneinheit (302) die Anzeige so steuert, dass die Position des detektierten Fehlers angezeigt wird, die Anzeige so zu steuern, dass ein Anzeigeelement zum Empfangen einer Änderung des Inspektionsausschlussbereichs angezeigt wird, wobei der Inspektionsausschlussbereich bei der Durchführung der Inspektion durch die erste Fehlerbestimmungsverarbeitungseinheit (355) von der Detektion ausgeschlossen wird,
und wobei der Inspektionsausschlussbereich gemäß einer Blatteinstellung änderbar ist.

2. Bilderzeugungsvorrichtung (100) nach Anspruch 1, wobei
die Benutzerschnittstelleneinheit (302) dazu eingerichtet ist, eine Anzeige so zu steuern, dass ein Schwellenwerteinstellbildschirm zur Entgegennahme einer Einstellung des Schwellenwerts angezeigt wird; und
die Benutzerschnittstelleneinheit (302) dazu eingerichtet ist, in einem Fall, dass bestimmt wird, dass der Fehlerzustand den auf dem Schwellenwerteinstellbildschirm eingestellten Schwellenwert überschreitet, den Benutzer über eine Anomalie zu benachrichtigen.

3. Bilderzeugungsvorrichtung (100) nach Anspruch 2, wobei
der Fehlerzustand eine Anzahl von Fehlern ist; und
die Benutzerschnittstelleneinheit (302) dazu eingerichtet ist, eine Einstellung des Schwellenwerts für die Anzahl der Fehler zu empfangen.

4. Bilderzeugungsvorrichtung (100) nach Anspruch 2, wobei
der Fehlerzustand eine Breite des Fehlers ist; und
die Benutzerschnittstelleneinheit (302) dazu eingerichtet ist, eine Einstellung des Schwellenwerts für die Breite des Fehlers zu empfangen.

5. Bilderzeugungsvorrichtung (100) nach Anspruch 2, wobei
der Fehlerzustand eine Länge des Fehlers ist; und
die Benutzerschnittstelleneinheit (302) dazu eingerichtet ist, eine Einstellung des Schwellenwerts für die Länge des Fehlers zu empfangen.

6. Bilderzeugungsvorrichtung (100) nach Anspruch 2, wobei
der Fehlerzustand eine Fläche des Fehlers ist; und
die Benutzerschnittstelleneinheit (302) dazu eingerichtet ist, eine Einstellung des Schwellenwerts für die Fläche des Fehlers zu empfangen.

7. Bilderzeugungsvorrichtung (100) nach Anspruch 2, wobei
der Fehlerzustand ein Helligkeitswert des Fehlers ist; und
die Benutzerschnittstelleneinheit (302) dazu eingerichtet ist, eine Einstellung des Schwellenwerts für den Helligkeitswert des Fehlers zu empfangen.

8. Bilderzeugungsvorrichtung (100) nach Anspruch 1, wobei die Benutzerschnittstelleneinheit (302) dazu eingerichtet ist, eine Einstellung eines Typs von Fehlern zu empfangen, der im Inspektionsausschlussbereich detektiert werden soll.

9. Inspektionsverfahren, enthaltend:
Lesen (S601) eines Druckerzeugnisses mittels einer Lesevorrichtung, wobei das Druckerzeugnis von einer Druckvorrichtung auf Grundlage von Druckdaten gedruckt wurde, um ein erstes zu inspizierendes Bild zu erzeugen;
Detektieren (S602) eines Fehlers auf dem Druckerzeugnis auf Grundlage eines Masterbildes und des ersten Bildes, wobei das Masterbild aus den Druckdaten des Druckerzeugnisses erzeugt wird;
Detektieren (S702) eines Fehlers in einem zweiten zu inspizierenden Bild sowie eines Fehlerzustands des Fehlers, wobei das zweite Bild durch die Lesevorrichtung ohne Blattdurchlauf erzeugt wird;
Festlegen (S606) eines Bereichs, der eine Position des im zweiten Bild detektierten Fehlers umfasst, als einen Inspektionsausschlussbereich, der von der Detektion eines Fehlers im ersten Bild ausgeschlossen wird;
Benachrichtigen eines Benutzers über eine Anomalie in einem Fall, dass bestimmt wird, dass der Fehlerzustand einen Schwellenwert überschreitet;
Steuern einer Anzeige, um in einem Fall, dass ein Fehler im zweiten Bild detektiert wird, die Position des detektierten Fehlers anzuzeigen;
**dadurch gekennzeichnet, dass** in einem Fall, dass die Anzeige so gesteuert wird, dass die Position des detektierten Fehlers angezeigt wird, die Anzeige so gesteuert wird, dass ein Anzeigeelement zum Empfangen einer Änderung des Inspektionsausschlussbereichs angezeigt wird, wobei der Inspektionsausschlussbereich bei der Durchführung der Inspektion durch Detektion eines Fehlers auf dem Druckerzeugnis auf Grundlage des Masterbildes und des ersten Bildes von der Detektion ausgeschlossen wird,
und wobei der Inspektionsausschlussbereich gemäß einer Blatteinstellung änderbar ist.

10. Trägermedium, das computerlesbaren Code trägt, enthaltend Anweisungen, die, wenn sie von einem Computersystem ausgeführt werden, das Computersystem dazu veranlassen, das Inspektionsverfahren nach dem vorhergehenden Anspruch durchzuführen.

## Revendications

1. Appareil de formation d'images (100) comprenant :
une unité de lecture d'images imprimées (307) conçue pour lire, au moyen d'un dispositif de lecture, un imprimé issu d'un appareil d'impression en fonction de données d'impression afin de générer une première image à inspecter,
une première unité de traitement de détermination de défauts (355) conçue pour détecter un défaut sur l'imprimé en fonction d'une image de contrôle et de la première image, l'image de contrôle étant générée à partir des données d'impression de l'imprimé,
une deuxième unité de traitement de détermination de défauts (357) conçue pour détecter un défaut dans une deuxième image à inspecter ainsi que l'état du défaut, la deuxième image étant générée par le dispositif de lecture sans passage de feuille,
une unité de paramétrage de région d'exclusion (356) conçue pour paramétrer une région comprenant l'emplacement du défaut détecté par la deuxième unité de traitement de détermination de défauts (357) comme région d'exclusion d'inspection devant être exclue de la détection de défauts par la première unité de traitement de détermination de défauts (355), et
une unité d'interface utilisateur (302) conçue pour avertir un utilisateur s'il a été déterminé que l'état du défaut dépasse une valeur seuil ;
l'unité d'interface utilisateur (302) étant conçue, si la deuxième unité de traitement de détermination de défauts (357) détecte le défaut dans la deuxième image, pour commander à l'écran d'afficher l'emplacement du défaut détecté ;
**caractérisé en ce que** l'unité d'interface utilisateur (302) est conçue, si l'unité d'interface utilisateur (302) commande à l'écran d'afficher l'emplacement du défaut détecté, pour commander à l'écran d'afficher un élément d'affichage destiné à recevoir une modification de la région d'exclusion d'inspection, la région d'exclusion d'inspection étant exclue de la détection lorsque l'inspection est réalisée par la première unité de traitement de détermination de défauts (355), ladite région d'exclusion d'inspection pouvant être modifiée selon un paramétrage de feuille.

2. Appareil de formation d'images (100) selon la revendication 1, dans lequel
l'unité d'interface utilisateur (302) est conçue pour commander à un écran d'afficher un visuel de paramétrage de seuil destiné à recevoir un paramétrage de la valeur seuil, et
l'unité d'interface utilisateur (302) est conçue pour avertir l'utilisateur d'une anomalie s'il a été déterminé que l'état du défaut dépasse la valeur seuil paramétrée sur l'écran de paramétrage de seuil.

3. Appareil de formation d'images (100) selon la revendication 2, dans lequel
l'état du défaut est le nombre de défauts, et
l'unité d'interface utilisateur (302) est conçue pour recevoir un paramétrage de la valeur seuil relativement au nombre de défauts.

4. Appareil de formation d'images (100) selon la revendication 2, dans lequel
l'état du défaut est la largeur du défaut, et
l'unité d'interface utilisateur (302) est conçue pour recevoir un paramétrage de la valeur seuil relativement à la largeur du défaut.

5. Appareil de formation d'images (100) selon la revendication 2, dans lequel
l'état du défaut est la longueur du défaut, et
l'unité d'interface utilisateur (302) est conçue pour recevoir un paramétrage de la valeur seuil relativement à la longueur du défaut.

6. Appareil de formation d'images (100) selon la revendication 2, dans lequel
l'état du défaut est la superficie du défaut, et
l'unité d'interface utilisateur (302) est conçue pour recevoir un paramétrage de la valeur seuil relativement à la superficie du défaut.

7. Appareil de formation d'images (100) selon la revendication 2, dans lequel
l'état du défaut est la valeur de luminosité du défaut, et
l'unité d'interface utilisateur (302) est conçue pour recevoir un paramétrage de la valeur seuil relativement à la valeur de luminosité du défaut.

8. Appareil de formation d'images (100) selon la revendication 1, dans lequel l'unité d'interface utilisateur (302) est conçue pour recevoir un paramétrage d'un type de défaut à détecter dans la région d'exclusion d'inspection.

9. Procédé d'inspection comprenant :
la lecture (S601), au moyen d'un dispositif de lecture, d'un imprimé issu d'un appareil d'impression en fonction de données d'impression afin de générer une première image à inspecter,
la détection (S602) d'un défaut dans l'imprimé en fonction d'une image de contrôle et de la première image, l'image de contrôle étant générée à partir des données d'impression de l'imprimé,
la détection (S702) d'un défaut dans une deuxième image à inspecter ainsi que de l'état du défaut, la deuxième image étant générée par le dispositif de lecture sans passage de feuille,
le paramétrage (S606) d'une région comprenant l'emplacement du défaut détecté dans la deuxième image en tant que région d'exclusion d'inspection à exclure de la détection d'un défaut dans la première image,
l'avertissement d'un utilisateur eu égard à une anomalie s'il a été déterminé que l'état du défaut dépasse une valeur seuil,
si un défaut est détecté dans la deuxième image, la commande d'un écran de façon qu'il affiche l'emplacement du défaut détecté ;
**caractérisé par**
s'il est commandé à l'écran d'afficher l'emplacement du défaut détecté, une commande de l'écran de façon qu'il affiche un élément d'affichage destiné à recevoir une modification de la région d'exclusion d'inspection, la région d'exclusion d'inspection étant exclue de la détection lorsque l'inspection est réalisée par détection d'un défaut sur l'imprimé en fonction de l'image de contrôle et de la première image, ladite région d'exclusion d'inspection pouvant être modifiée selon un paramétrage de feuille.

10. Support de données portant un code lisible par ordinateur comprenant des instructions qui, lorsqu'elles sont exécutées par un système informatique, amènent le système informatique à mettre en œuvre le procédé d'inspection selon la revendication précédente.
